# EUROPEAN PATENT APPLICATION

(11) **EP 4 760 096 A1**
(43) Date of publication of application: **17.06.2026**
(21) Application number: 24851637.9
(22) Date of filing: 26.07.2024
(51) Int. Cl.: F04B 39/06, F04B 39/00, F04C 29/04, F25B 1/00, F25B 1/04

(54) **COMPRESSOR AND REFRIGERATION CYCLE SYSTEM**

(30) Priority: 10.08.2023 JP 2023131453
(71) Applicant: Panasonic Intellectual Property Management Co., Ltd., Kadoma-shi, Osaka 571-0057 (JP)
(72) Inventor: HIWATA, Akira, Kadoma-shi, Osaka 571-0057 (JP)
(74) Representative: Eisenführ Speiser
(86) International application number: PCT/JP2024/026763
(87) International publication number: WO 2025/033212

(57) **Abstract**

An electric motor portion of a compressor includes passages through which an upper space and a lower space in a sealed container communicate with each other. Here, A denotes a total sectional area of all passages (rotor passages) located at a rotor of the electric motor portion, B denotes a total sectional area of all passages (outside-rotor passages) located outside the rotor, C denotes a total heat transfer area of all the rotor passages, D denotes a total heat transfer area of all the outside-rotor passages, and S denotes a sectional area of the sealed container based on an inner diameter of the sealed container. In the compressor, A≥B is satisfied, C≥D is satisfied, a ratio C/S is 1.0 or more (C/S≥1.0), or a ratio (A+B)/S is 0.05 or more ((A+B)/S≥0.05). Thus, the propagation of a disproportionation reaction of hydrofluoroolefin is satisfactorily suppressed or weakened without being significantly influenced by the configuration of the compressor.

## Description

### Technical Field

The present invention relates to a compressor that uses a refrigeration-cycle working medium containing at least hydrofluoroolefin as a refrigerant component and can effectively suppress or weaken a disproportionation reaction of the hydrofluoroolefin, and to a refrigeration cycle system using the compressor.

### Background Art

As a refrigeration-cycle working medium (a refrigerant or a heat medium), the use of hydrofluoroolefin (HFO) having a lower global warming potential (GWP) has been recently proposed. One representative example of the hydrofluoroolefin is 1,1,2-trifluoroethylene (HFO1123). The 1,1,2-trifluoroethylene is lower in stability than conventional HFCs and the like. Therefore, the 1,1,2-trifluoroethylene hardly remains in the atmosphere, and thus, has a low ODP and a low GWP.

It is known that due to its low stability, the hydrofluoroolefin is likely to undergo a self-decomposition reaction called a disproportionation reaction, and a polymerization reaction that follows the self-decomposition reaction (hereinafter referred to as the "disproportionation reaction"). The disproportionation reaction tends to occur by being induced by, for example, heat generated during the use of the refrigeration-cycle working medium. In addition, it is also known that since large heat dissipation is caused by the occurrence of the disproportionation reaction, the disproportionation reactions occur successively, and the disproportionation reaction propagates in the compressor in some cases.

Therefore, for example, PTL 1 proposes that heat absorbers made of metal are located in a compressor in order to suppress the propagation of the disproportionation reaction.

Specific examples of the heat absorbers include: a metal member located around a moving part (such as a motor or a crankshaft) of the compressor; a metal member located around the inside (inner pin) of a terminal pin; and a metal member (such as a casing) constituting the compressor itself. According to the compressor described in PTL 1, even when the disproportionation reaction of the hydrofluoroolefin contained in the refrigerant occurs, these heat absorbers absorb heat generated by the disproportionation reaction. Thus, an excessive temperature increase of the refrigerant is suppressed, and the propagation of the disproportionation reaction is suppressed.

### Citation List

### Patent Literature

PTL 1: Japanese Laid-Open Patent Application Publication No. 2022-027634

### Summary of Invention

### Technical Problem

However, according to the compressor described in PTL 1, the installation of the heat absorbers is limited to a configuration in which the heat absorbers are added to the compressor. Therefore, there is a possibility that the heat capacity of the heat absorbers is insufficient, and the heat absorbers cannot satisfactorily absorb the heat of the disproportionation reaction of the hydrofluoroolefin and cannot satisfactorily suppress the propagation of the disproportionation reaction.

The present invention was made to solve the above problems, and an object of the present invention is to satisfactorily suppress or weaken the propagation of a disproportionation reaction of hydrofluoroolefin without being significantly influenced by the configuration of a compressor.

### Solution to Problem

To solve the above problems, a compressor according to the present disclosure is a compressor that uses a refrigeration-cycle working medium containing at least hydrofluoroolefin as a refrigerant component, the compressor including: an electric motor portion including a rotor and a stator; a compression mechanism portion driven by the electric motor portion; and a sealed container that accommodates the electric motor portion and the compression mechanism portion, wherein: an upper space located above the electric motor portion and a lower space located under the electric motor portion are in the sealed container; the electric motor portion includes a plurality of passages through which the upper space and the lower space communicate with each other; and a formula "A≥B" is satisfied, where A denotes a total sectional area of all passages located at the rotor among the plurality of passages, and B denotes a total sectional area of all passages located outside the rotor among the plurality of passages.

Moreover, to solve the above problems, a compressor according to the present disclosure is a compressor that uses a refrigeration-cycle working medium containing at least hydrofluoroolefin as a refrigerant component, the compressor including: an electric motor portion including a rotor and a stator; a compression mechanism portion driven by the electric motor portion; and a sealed container that accommodates the electric motor portion and the compression mechanism portion, wherein: an upper space located above the electric motor portion and a lower space located under the electric motor portion are in the sealed container; the electric motor portion includes a plurality of passages through which the upper space and the lower space communicate with each other; and when a heat transfer area of each passage is defined as a product (π×d×L) of an equivalent diameter d of the passage, a passage length L, and π, a formula "C≥D" is satisfied, where C denotes a total heat transfer area of all passages located at the rotor among the plurality of passages, and D denotes a total heat transfer area of all passages located outside the rotor among the plurality of passages.

Moreover, to solve the above problems, a compressor according to the present disclosure is a compressor that uses a refrigeration-cycle working medium containing at least hydrofluoroolefin as a refrigerant component, the compressor including: an electric motor portion including a rotor and a stator; a compression mechanism portion driven by the electric motor portion; and a sealed container that accommodates the electric motor portion and the compression mechanism portion, wherein: an upper space located above the electric motor portion and a lower space located under the electric motor portion are in the sealed container; the electric motor portion includes a plurality of passages through which the upper space and the lower space communicate with each other; and when a heat transfer area of each passage is defined as a product (π×d×L) of an equivalent diameter d of the passage, a passage length L, and π, a ratio C/S is 1.0 or more (C/S≥1.0), where C denotes a total heat transfer area of all passages located at the rotor among the plurality of passages, and S denotes a sectional area of the sealed container based on an inner diameter of the sealed container.

Moreover, to solve the above problems, a compressor according to the present disclosure is a compressor that uses a refrigeration-cycle working medium containing at least hydrofluoroolefin as a refrigerant component, the compressor including: an electric motor portion including a rotor and a stator; a compression mechanism portion driven by the electric motor portion; and a sealed container that accommodates the electric motor portion and the compression mechanism portion, wherein: an upper space located above the electric motor portion and a lower space located under the electric motor portion are in the sealed container; the electric motor portion includes a plurality of passages through which the upper space and the lower space communicate with each other; and a ratio (A+B)/S is 0.05 or more ((A+B)/S≥0.05), where A denotes a total sectional area of all passages located at the rotor among the plurality of passages, B denotes a total sectional area of all passages located outside the rotor among the plurality of passages, and S denotes a sectional area of the sealed container based on an inner diameter of the sealed container.

According to any of the above configurations, the sectional area or the heat transfer area of the rotor passages located at the rotor among the plurality of passages located at the electric motor portion is made relatively large, or the lower limit of the total sectional area or the total heat transfer area of the plurality of passages is defined based on the sectional area of the sealed container. Thus, among all the passages located at the electric motor portion, the rotor passages, which are relatively less likely to propagate the disproportionation reaction, can be made predominant. As a result, the disproportionation reaction that occurs in one of the upper space located above the electric motor portion and the lower space located under the electric motor portion can be satisfactorily prevented from propagating to the other.

Moreover, since the propagation of the disproportionation reaction is suppressed, the disproportionation reaction itself can be dampened and finally eliminated by the cooling effect of the electric motor portion which is the main function of the plurality of passages. As a result, the possibility of the occurrence of a large-scale disproportionation reaction in the entire inside of the compressor can be effectively suppressed or avoided, and this can further improve the reliability of the compressor. In addition, the reliability of the refrigeration cycle system including the compressor can be further improved.

Moreover, the present disclosure includes a refrigeration cycle system that uses a refrigeration-cycle working medium containing at least hydrofluoroolefin as a refrigerant component and includes the compressor having any one of the above configurations.

The above object, other objects, features, and advantages of the present disclosure will be made clear by the following detailed explanation of preferred embodiments with reference to the attached drawings.

### Advantageous Effects of Invention

By the above configuration, the present invention achieves an effect of being able to satisfactorily suppress or weaken the propagation of a disproportionation reaction of hydrofluoroolefin without being significantly influenced by the configuration of a compressor.

### Brief Description of Drawings

FIG. 1 is a schematic longitudinal sectional view showing one example of a compressor according to one embodiment of the present disclosure.
FIG. 2 is a schematic cross-sectional view showing one example of a passage of an electric motor portion of the compressor shown in FIG. 1.
FIGS. 3A and 3B are schematic block diagrams each showing one example of a refrigeration cycle system including the compressor shown in FIG. 1.

### Description of Embodiments

### Findings, etc., on Which the Present Disclosure Is Based

In the compressor described in PTL 1, it is substantially assumed that the internal volume of the compressor, i.e., the volume of the sealed container (compressor shell) does not change. Therefore, the volume in which the heat absorbers are located cannot be adequately secured in the sealed container in some cases. In this case, the heat absorbers cannot retain an adequate heat capacity to absorb the heat of the disproportionation reaction. As a result, there is a possibility that the propagation of the disproportionation reaction cannot be satisfactorily suppressed.

In order to secure the volume in which the heat absorbers are located, the internal volume of the sealed container needs to be increased. In this case, merely increasing the internal volume is insufficient, and the pressure-resistant design of the sealed container needs to be reviewed. Moreover, when the internal volume of the sealed container is increased, the compressor itself excessively increases in size, and this promotes the successive occurrence of the disproportionation reactions.

Moreover, as described above, in the compressor described in PTL 1, examples of the heat absorbers include: the metal member located around the moving part of the compressor; the metal member located around the inside of the terminal pin; and the metal member constituting the compressor itself. In other words, utilized as the heat absorbers are: a member located at a part (the moving part of the compressor) where high temperature and high pressure are expected; and a member located at a part (the inside of the terminal pin) that may trigger the disproportionation reaction; and an existing member included in the compressor.

To be specific, these heat absorbers are not located based on how the disproportionation reaction of the hydrofluoroolefin which occurs in the compressor propagates in the compressor. Therefore, the heat generated when the disproportionation reaction occurs in the compressor do not necessarily propagate selectively around the heat absorbers. As a result, there is a possibility that these heat absorbers cannot satisfactorily absorb the heat of the disproportionation reaction.

Here, the present inventors have diligently studied, and as a result, have uniquely found that: the inside of the compressor can be divided into an upper space and a lower space when viewed from an electric motor portion; the disproportionation reaction of the hydrofluoroolefin occurs in one of the upper space and the lower space, and then, propagates to the other through a plurality of passages which are located at the electric motor portion and through which these spaces communicate with each other; and among the plurality of passages located at the electric motor portion, passages located at the rotor are considered less likely to allow the propagation of the disproportionation reaction compared to passages located outside the rotor. Thus, the present invention was completed.

To be specific, a compressor according to the present disclosure may be a compressor that uses a refrigeration-cycle working medium containing at least hydrofluoroolefin as a refrigerant component, the compressor including: an electric motor portion including a rotor and a stator; a compression mechanism portion driven by the electric motor portion; and a sealed container that accommodates the electric motor portion and the compression mechanism portion, wherein: an upper space located above the electric motor portion and a lower space located under the electric motor portion may be in the sealed container; the electric motor portion may include a plurality of passages through which the upper space and the lower space communicate with each other; and a formula "A≥B" may be satisfied, where A denotes a total sectional area of all passages located at the rotor among the plurality of passages, and B denotes a total sectional area of all passages located outside the rotor among the plurality of passages.

Or, a compressor according to the present disclosure is a compressor that uses a refrigeration-cycle working medium containing at least hydrofluoroolefin as a refrigerant component, the compressor including: an electric motor portion including a rotor and a stator; a compression mechanism portion driven by the electric motor portion; and a sealed container that accommodates the electric motor portion and the compression mechanism portion, wherein: an upper space located above the electric motor portion and a lower space located under the electric motor portion may be in the sealed container; the electric motor portion may include a plurality of passages through which the upper space and the lower space communicate with each other; and when a heat transfer area of each passage is defined as a product (π×d×L) of an equivalent diameter d of the passage, a passage length L, and π, a formula "C≥D" may be satisfied, where C denotes a total heat transfer area of all passages located at the rotor among the plurality of passages, and D denotes a total heat transfer area of all passages located outside the rotor among the plurality of passages.

Or, a compressor according to the present disclosure is a compressor that uses a refrigeration-cycle working medium containing at least hydrofluoroolefin as a refrigerant component, the compressor including: an electric motor portion including a rotor and a stator; a compression mechanism portion driven by the electric motor portion; and a sealed container that accommodates the electric motor portion and the compression mechanism portion, wherein: an upper space located above the electric motor portion and a lower space located under the electric motor portion may be in the sealed container; the electric motor portion may include a plurality of passages through which the upper space and the lower space communicate with each other; and when a heat transfer area of each passage is defined as a product (π×d×L) of an equivalent diameter d of the passage, a passage length L, and π, a ratio C/S may be 1.0 or more (C/S≥1.0), where C denotes a total heat transfer area of all passages located at the rotor among the plurality of passages, and S denotes a sectional area of the sealed container based on an inner diameter of the sealed container.

Or, a compressor according to the present disclosure is a compressor that uses a refrigeration-cycle working medium containing at least hydrofluoroolefin as a refrigerant component, the compressor including: an electric motor portion including a rotor and a stator; a compression mechanism portion driven by the electric motor portion; and a sealed container that accommodates the electric motor portion and the compression mechanism portion, wherein: an upper space located above the electric motor portion and a lower space located under the electric motor portion may be in the sealed container; the electric motor portion may include a plurality of passages through which the upper space and the lower space communicate with each other; and a ratio (A+B)/S may be 0.05 or more ((A+B)/S≥0.05), where A denotes a total sectional area of all passages located at the rotor among the plurality of passages, B denotes a total sectional area of all passages located outside the rotor among the plurality of passages, and S denotes a sectional area of the sealed container based on an inner diameter of the sealed container.

According to any of the above configurations, the sectional area or the heat transfer area of the rotor passages located at the rotor among the plurality of passages located at the electric motor portion is made relatively large, or the lower limit of the total sectional area or the total heat transfer area of the plurality of passages is defined based on the sectional area of the sealed container. Thus, among all the passages located at the electric motor portion, the cooling effect of the disproportionation reaction by the rotor passages can be made predominant. As a result, the disproportionation reaction that occurs in one of the upper space located above the electric motor portion and the lower space located under the electric motor portion can be satisfactorily prevented from propagating to the other.

Moreover, since the propagation of the disproportionation reaction is suppressed, the disproportionation reaction itself can be dampened and finally eliminated by the cooling effect of the electric motor portion which is the main function of the plurality of passages. As a result, the possibility of the occurrence of a large-scale disproportionation reaction in the entire inside of the compressor can be effectively suppressed or avoided, and this can further improve the reliability of the compressor. In addition, the reliability of the refrigeration cycle system including the compressor can be further improved.

In the compressor configured as above, the passages located outside the rotor may include at least one of an air gap passage located between the rotor and the stator or a stator passage located between the stator and the sealed container.

Moreover, in the compressor configured as above, the hydrofluoroolefin may include at least one of 1,1,2-trifluoroethylene (HFO1123) or 1,2-difluoroethylene (HFO1132).

Moreover, in the compressor configured as above, the refrigeration-cycle working medium may further contain: difluoromethane as the refrigerant component; and as a disproportionation inhibitor, at least one of saturated hydrocarbon, haloalkane, or fluoroalkane having a boiling point of 0°C or less and having one to three carbon atoms (except for difluoromethane).

Furthermore, the present disclosure includes a refrigeration cycle system that uses a refrigeration-cycle working medium containing at least hydrofluoroolefin as a refrigerant component and includes the compressor having any one of the above configurations.

Hereinafter, a representative embodiment of the present invention will be described with reference to the drawings. In the following description and the drawings, the same reference signs are used for the same or corresponding components, and the repetition of the same explanation is avoided.

### Refrigerant Component

In a compressor according to the present disclosure, a refrigeration-cycle working medium containing as a refrigerant component at least hydrofluoroolefin (HFO) that causes a disproportionation reaction is used.

Specifically, for example, the hydrofluoroolefin is a compound having two carbon atoms, such as 1,1,2-trifluoroethylene (CF₂ = CHF, HFO1123), trans-1,2-difluoroethylene (CHF = CHF(E), HFO1132(E)), or cis-1,2-difluoroethylene (CHF = CHF(Z), HFO1132(Z)). However, the hydrofluoroolefin is not especially limited. Only one of these hydrofluoroolefins may be used as the refrigerant component, or a combination of two or more of these hydrofluoroolefins may be used as the refrigerant component.

The hydrofluoroolefin includes an ethylene structure as a skeleton, i.e., a double bond between a carbon atom and a carbon atom, and includes such a chemical structure that at least one of two hydrogen atoms bonded to one of the carbon atoms is substituted by a fluorine atom, or at least one of two hydrogen atoms bonded to both of the carbon atoms is substituted by a fluorine atom. In the hydrofluoroolefin, at least one of the hydrogen atoms may be substituted by another atom or another substituent.

For example, the 1,1,2-trifluoroethylene includes such a structure that: both of two hydrogen atoms bonded to one of the carbon atoms (i.e., the carbon atom at a first position) of the ethylene structure are substituted by fluorine atoms; and one of two hydrogen atoms bonded to the other carbon atom (i.e., the carbon atom at a second position) is substituted by a fluorine atom.

Or, the trans-1,2-difluoroethylene has such a structure that: one of two hydrogen atoms bonded to the carbon atom at the first position in the ethylene structure is substituted by a fluorine atom; and between two hydrogen atoms bonded to the carbon atom at the second position, only the hydrogen atom at a position which is not adjacent to the carbon atom at the first position but is opposed to the carbon atom across the double bond is substituted by a fluorine atom.

Since such hydrofluoroolefin includes the ethylene skeleton, i.e., the carbon-carbon double bond as described above, the double bond is easily decomposed. To be specific, ozone in the atmosphere generates hydroxyl radicals (OH radicals) by a photochemical reaction. Since the hydroxyl radicals can cause an addition reaction with respect to the double bond, the hydrofluoroolefin is easily decomposed. Therefore, the hydrofluoroolefin is less likely to influence ozone layer depletion and global warming.

The refrigeration-cycle working medium used in the present disclosure may include, as the refrigerant component, difluoromethane (HFC32, R32, chemical formula: CH₂F₂) in addition to the hydrofluoroolefin. In this case, the hydrofluoroolefin is regarded as a "main component (main refrigerant component)" of the refrigerant component in the refrigeration-cycle working medium used in the present disclosure, and the difluoromethane is regarded as a "subcomponent (sub-refrigerant component)" of the refrigerant component in the refrigeration-cycle working medium used in the present disclosure.

As described above, the difluoromethane has an ozone depletion potential (ODP) of zero and has a more satisfactory refrigerant performance than HCFC (hydrochlorofluorocarbon) that has been used before.

Moreover, the refrigeration-cycle working medium used in the present disclosure may include, as the refrigerant component, "another refrigerant component" in addition to the hydrofluoroolefin as the main refrigerant component and the difluoromethane as the sub-refrigerant component. Representative examples of the "another refrigerant component" include: hydrofluorocarbons (HFCs), such as difluoroethane, trifluoroethane, tetrafluoroethane, pentafluoroethane, pentafluoropropane, hexafluoropropane, heptafluoropropane, pentafluorobutane, and heptafluorocyclopentane; and hydrofluoroolefins (HFOs) having three or more carbon atoms, such as monofluoropropene, trifluoropropene, tetrafluoropropene, pentafluoropropene, and hexafluorobutene. However, the "another refrigerant component" is not especially limited.

These components described as the "another refrigerant component" above are known as being less likely to influence the ozone layer depletion and the global warming. Therefore, each of these components described as the "another refrigerant component" above can be used as the refrigerant component together with the hydrofluoroolefin or together with the hydrofluoroolefin and the difluoromethane. Only one of the components described as the "another refrigerant component" above may be used together, or a suitable combination of two or more of the components described as the "another refrigerant component" above may be used together.

The content of the hydrofluoroolefin in the refrigeration-cycle working medium is not especially limited. When a total amount (hereinafter referred to as a "refrigerant related component total amount," for convenience of explanation) of the refrigerant component and the disproportionation inhibitor among the components constituting the refrigeration-cycle working medium is regarded as 100 mass %, the content of the hydrofluoroolefin may be 40 mass % or more. Although the lower limit of the content of the hydrofluoroolefin may be 40 mass % as described above, the content of the hydrofluoroolefin is preferably 45 mass % or more, more preferably 50 mass % or more, and further preferably 70 mass % or more.

When the content of the hydrofluoroolefin is less than 40 mass % of the refrigerant related component total amount, the content of the hydrofluoroolefin in the refrigeration-cycle working medium is too low, and the contents of the other refrigerant components become high. Therefore, in the refrigeration-cycle working medium, the advantage of using the hydrofluoroolefin having a low GWP cannot be fully realized.

Moreover, the upper limit of the content of the hydrofluoroolefin is not especially limited, but may be 98.8 mass % or less of the refrigerant related component total amount. As will be described later, in the present disclosure, the refrigeration-cycle working medium may contain the disproportionation inhibitor that is in a gaseous or liquid state at normal temperature and pressure. A preferable lower limit of the content of the disproportionation inhibitor is, for example, 1.2 mass %. Therefore, when only the hydrofluoroolefin is used as the refrigerant component, and the other refrigerant components are not used (the content of the hydrofluoroolefin as the refrigerant component is 100 mass %), the upper limit of the content of the hydrofluoroolefin in the refrigerant related component total amount is necessarily 98.8 mass %.

When another refrigerant component other than the hydrofluoroolefin is contained as the refrigerant component, the content of the "another refrigerant component" is not especially limited. As described above, one preferable example of the "another refrigerant component" is difluoromethane. Since the preferable upper limit of the content of the hydrofluoroolefin that is the essential refrigerant component is 40 mass % of the refrigerant related component total amount, the content of the difluoromethane may be less than 60 mass % of the refrigerant related component total amount. When the "another refrigerant component" is contained, one especially preferable example of the content of the hydrofluoroolefin is a value within a range from 70 mass % to 80 mass %. However, the content of the hydrofluoroolefin is not limited to this.

### Other Components That May be Used Together

Since the refrigeration-cycle working medium used in the present disclosure is used in the refrigeration cycle system, the refrigeration-cycle working medium can be used together with lubricating oil (freezer oil) that lubricates a sealed compressor included in the refrigeration cycle system. As described above, the refrigeration-cycle working medium used in the present disclosure may be constituted by at least the refrigerant component which contains the hydrofluoroolefin substantially as a "major component." Moreover, when the refrigeration-cycle working medium is used together with the lubricating oil, a working medium-containing composition can be regarded as being constituted by the refrigerant component, a lubricating oil component, and other components.

As the lubricating oil component contained in the working medium-containing composition (the lubricating oil component used together with the refrigeration-cycle working medium), various types of known lubricating oil can be suitably used in the refrigeration cycle system. Specific examples of the lubricating oil include ester lubricating oil, ether lubricating oil, glycol lubricating oil, alkylbenzene lubricating oil, fluorine lubricating oil, mineral oil, and hydrocarbon synthetic oil. However, the lubricating oil is not especially limited. Only one type of lubricating oil may be used, or a suitable combination of two or more types of lubricating oil may be used.

Moreover, various known additives may be added to the working medium-containing composition. Specific examples of the additives include an oxidation inhibitor, a moisture scavenger, a metal deactivator, an abrasion preventing agent, and an antifoaming agent. However, the additive is not especially limited. The oxidation inhibitor is used to improve heat stability, oxidation resistance, chemical stability, and the like of the refrigerant component or the lubricating oil. The moisture scavenger is used to, when moisture enters the refrigeration cycle system, remove the moisture and especially suppress a property change of the lubricating oil. The metal deactivator is used to suppress or prevent a chemical reaction caused by catalysis of a metal component. The abrasion preventing agent is used to reduce wear at a slide portion in the compressor, especially wear during an operation in which pressure is high. The antifoaming agent is used to especially suppress the generation of air bubbles in the lubricating oil.

Specific types of additives are not especially limited, and a known compound and the like may be suitably used depending on conditions. Moreover, as the additive, only one type of compound or the like may be used, or a suitable combination of two or more types of compounds or the like may be used. Furthermore, the amount of additive added is not especially limited. A known amount of additive may be added as long as the property of the refrigeration-cycle working medium used in the present disclosure is not spoiled, or the property of the working medium-containing composition including the refrigeration-cycle working medium is not spoiled.

As described above, the disproportionation inhibitor that is in a gaseous or liquid state at normal temperature and pressure may be added in advance to the refrigeration-cycle working medium used in the present disclosure. Specifically, for example, the disproportionation inhibitor is at least one of: saturated hydrocarbon having two to five carbon atoms; haloalkane that has one or two carbon atoms and is not a compound in which all halogen atoms are fluorine; and fluoroalkane having a boiling point of 0°C or less and having one to three carbon atoms (except for difluoromethane). Only one of these disproportionation inhibitors may be used, or a suitable combination of two or more of these disproportionation inhibitors may be used.

Specific examples of the saturated hydrocarbon as the disproportionation inhibitor include ethane, n-propane, cyclopropane, n-butane, cyclobutane, isobutane (2-methylpropane), methylcyclopropane, n-pentane, isopentane (2-methylbutane), neopentane (2,2-dimethylpropane), and methylcyclobutane. However, the saturated hydrocarbon is not especially limited. Among these, n-propane is especially preferable.

Moreover, examples of the haloalkane having one carbon atom, i.e., halomethane include (mono)iodomethane (CH₃I), diiodomethane (CH₂I₂), dibromomethane (CH₂Br₂), bromomethane (CH₃Br), dichloromethane (CH₂Cl₂), chloroiodomethane (CH₂ClI), dibromochloromethane (CHBr₂Cl), tetraiodomethane (CI₄), tetrabromide (CBr₄), bromotrichloromethane (CBrCl₃), dibromodichloromethane (CBr₂Cl₂), tribromofluoromethane (CBr₃F), fluorodiiodomethane (CHFI₂), difluorodiiodomethane (CF₂I₂), dibromodifluoromethane (CBr₂F₂), trifluoroiodomethane (CF₃I), and difluoroiodomethane (CHF₂I). However, the haloalkane having one carbon atom, i.e., the halomethane is not especially limited. Among these, for example, dibromomethane (CH₂Br₂), bromomethane (CH₃Br), dibromodichloromethane (CBr₂Cl₂), and trifluoroiodomethane (CF₃I) are preferable, and trifluoroiodomethane (CF₃I) is more preferable.

Moreover, examples of the haloalkane having two carbon atoms, i.e., haloethane include 1,1,1-trifluoro-2-iodoethane (CF₃CH₂I), monoiodoethane (CH₃CH₂I), monobromoethane (CH₃CH₂Br), and 1,1,1-triiodoethane (CH₃CI₃). Among these, in consideration of the availability, the value of the ODP, the handleability, and the like, 1,1,1-trifluoro-2-iodoethane (CF₃CH₂I) can be especially preferably used.

Examples of the fluoroalkane having one to three carbon atoms include: fluoromethanes, such as fluoromethane (boiling point of -78.2°C), difluoromethane (boiling point of -51.6°C), trifluoromethane (boiling point of -84.4°C), and tetrafluoromethane (boiling point of -127.8°C); fluoroethanes, such as fluoroethane (boiling point of -37.1°C), 1,1-difluoroethane (boiling point of -24.7°C), 1,1,1-trifluoroethane (boiling point of -47.2°C), 1, 1, 1,2-tetrafluoroethane (boiling point of -26.3°C), and 1,1,1,2,2-pentafluoroethane (boiling point of -48.5°C); and fluoropropanes, such as 1-fluoropropane (boiling point of -2.5°C), 2-fluoropropane (boiling point of -10.0°C), 2,2-difluoropropane (boiling point of -1.0°C), 1,1,1-trifluoropropane (boiling point of -12.0°C), 1,1,2,2-tetrafluoropropane (boiling point of -0.8°C), and 1,1,1,3,3,3-hexafluoropropane (boiling point of -1.4°C).

The amount of disproportionation inhibitor added is not especially limited. When the refrigerant related component total amount (the total amount of the refrigerant component and the disproportionation inhibitor) is regarded as 100 mass %, the upper limit of the amount (content) of disproportionation inhibitor added may be 10 mass % or less of the refrigerant related component total amount, preferably 5 mass % or less, and more preferably 3 mass % or less. This is because when the content of the disproportionation inhibitor exceeds 10 mass % of the refrigerant related component total amount, the content of the disproportionation inhibitor is too high in the refrigeration-cycle working medium, and therefore, the refrigeration-cycle working medium may not be able to exert a satisfactory physical property as the "refrigerant." Needless to say, the disproportionation inhibitor may be added in an amount of 10 mass % or more of the refrigerant related component total amount depending on the composition of the refrigeration-cycle working medium.

As described above, as the disproportionation inhibitor, two or more of the saturated hydrocarbons, the haloalkanes, and the fluoroalkanes can be used together. At this time, a mixing ratio of the saturated hydrocarbon, the haloalkane, and the fluoroalkane is not especially limited. Since the preferable content as the total amount of the disproportionation inhibitors is 10 mass % or less as described above, two or more of the saturated hydrocarbons, the haloalkanes, and the fluoroalkanes may be used together at an appropriate mixing ratio within this range.

In the present disclosure, as the saturated hydrocarbons, the haloalkanes, and the fluoroalkanes, a plurality of compounds of each type may be used together. Herein, using two or more of the saturated hydrocarbons, the haloalkanes, and the fluoroalkanes means that two or more of: one or more compounds classified as the saturated hydrocarbons; one or more compounds classified as the haloalkanes; and one or more compounds classified as the fluoroalkanes may be used together.

Each of the saturated hydrocarbons, the haloalkanes, and the fluoroalkanes can suppress or delay the disproportionation reaction even when added in an amount of 10 mass % or less. Moreover, when two or more of the saturated hydrocarbons, the haloalkanes, and the fluoroalkanes are used together as described in the present disclosure, the disproportionation reaction can be suppressed or delayed with a smaller amount of these compounds than when only one of the saturated hydrocarbons, the haloalkanes, and the fluoroalkanes is used. More specifically, the upper limit of the total amount of disproportionation inhibitors added (i.e., the total amount of two or more of the saturated hydrocarbons, the haloalkanes, and the fluoroalkanes) may be 10 mass % or less, and may be 5 mass % or less. When the saturated hydrocarbon and the haloalkane are combined with each other, 3 mass % or less can be adopted as a more preferable upper limit.

At this time, the mixing ratio of two or more of the saturated hydrocarbons, the haloalkanes, and the fluoroalkanes is not especially limited. For example, when the saturated hydrocarbon and the haloalkane are used together, and the amount of saturated hydrocarbon and haloalkane added is 3 mass % or less, one representative example of the mixing ratio between the saturated hydrocarbon and the haloalkane is in the range from 1 : 0.5 to 1 : 2 in terms of mass ratio. Herein, three combinations of the saturated hydrocarbon and the haloalkane can be exemplified. Representative mixing ratios of these combinations are as follows: [1] when saturated hydrocarbon, haloethane, and halomethane are combined with each other, the mass ratio is in the range from 1 : 0.25 : 0.25 to 1 : 1 : 1; [2] when saturated hydrocarbon and haloethane are combined with each other, the mass ratio is in the range from 1 : 0.25 to 1 : 1; and [3] when saturated hydrocarbon and halomethane are combined with each other, the mass ratio is in the range from 1 : 0.25 to 1 : 1.

Moreover, the lower limit of the amount of two or more of the saturated hydrocarbons, the haloalkanes, and the fluoroalkanes is not especially limited. A representative lower limit is 1.2 mass % or more of the refrigerant related component total amount. Even when the total amount of two or more of the saturated hydrocarbons, the haloalkanes, and the fluoroalkanes is less than 1.2 mass %, the effect of, for example, suppressing the disproportionation reaction can be obtained. However, when the total amount of two or more of the saturated hydrocarbons, the haloalkanes, and the fluoroalkanes is 1.2 mass % or more, the effect of, for example, suppressing the disproportionation reaction can be obtained more suitably. Therefore, in the present disclosure, a more preferable range of the content of two or more of the saturated hydrocarbons, the haloalkanes, and the fluoroalkanes is a range of 1.2 mass % or more and 3 mass % or less of the refrigerant related component total amount.

### Configuration Example of Compressor

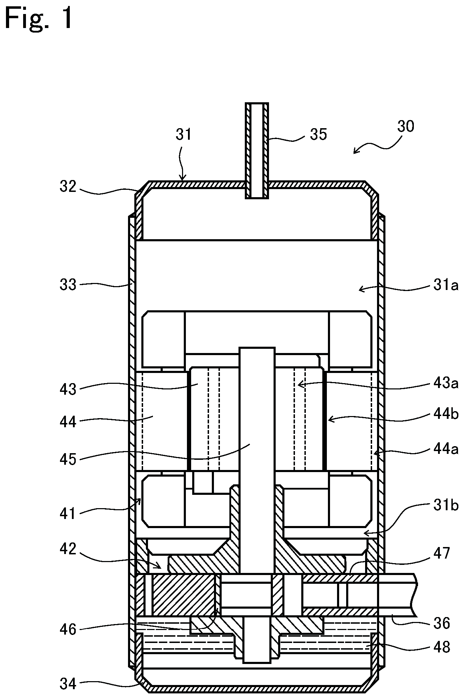

Next, one representative example of the compressor according to the present disclosure will be described. The specific configuration of the compressor according to the present disclosure is not especially limited as long as the compressor uses the above-described refrigeration-cycle working medium, i.e., the refrigeration-cycle working medium containing as the refrigerant component the hydrofluoroolefin that causes the disproportionation reaction. One representative example of the compressor is a rotary compressor 30 shown in FIG. 1. This rotary compressor 30 is one representative example of the compressor used in a below-described home air conditioning equipment. This air conditioning equipment is one example of the refrigeration cycle system (or a refrigeration cycle apparatus) according to the present disclosure.

The compressor 30 includes an electric motor portion 41 and a compression mechanism portion 42 which are accommodated in a sealed container 31 (or a compressor shell). The sealed container 31 has a cylindrical shape that is vertically long, and is constituted by an upper shell 32, a body shell 33, and a lower shell 34 according to the configuration shown in FIG. 1, for example. The upper shell 32 constitutes an upper portion of the sealed container 31. The lower shell 34 constitutes a lower portion of the sealed container 31. The body shell 33 constitutes most of the sealed container 31 (i.e., a main body of the sealed container 31). The upper shell 32 and the lower shell 34 are fitted to the body shell 33. Moreover, a discharge pipe 35 is located at the upper shell 32, and a suction pipe 36 is located at a lower lateral portion of the body shell 33.

The electric motor portion 41 is a motor including a rotor 43 and a stator 44, and a shaft 45 is located at the rotor 43. The shaft 45 is rotatably coupled to a piston 46 included in the compression mechanism portion 42, and the piston 46 moves rotationally within a cylinder 47 included in the compression mechanism portion 42. Therefore, the compression mechanism portion 42 is driven by the electric motor portion 41.

In the example shown in FIG. 1, the electric motor portion 41 is located at an upper side in the sealed container 31, and the compression mechanism portion 42 is located under the electric motor portion 41. Therefore, the electric motor portion 41 is located in an upper portion of an internal space of the sealed container 31, and the compression mechanism portion 42 is located in a lower portion of the internal space. Lubricating oil 48 is enclosed in the sealed container 31. In the example shown in FIG. 1, the lubricating oil 48 is stored under the compression mechanism portion 42 in the sealed container 31 (in a bottom portion in the sealed container 31).

Each of the outer diameter of the electric motor portion 41 and the diameter of the cylinder 47 of the compression mechanism portion 42 is substantially equal to the inner diameter of the cylindrical sealed container 31. The shaft 45 rotates by the rotation of the electric motor portion 41, and this rotational driving force is transmitted to the piston 46 of the compression mechanism portion 42. The piston 46 rotates in the cylinder 47 by the rotational driving force of the electric motor portion 41. A low-pressure gas refrigerant is introduced to the cylinder 47 through the suction pipe 36 and compressed by the rotation of the cylinder 47. The high-pressure refrigerant gas is discharged to an inside of the sealed container 31 (a lower portion of the electric motor portion 41). After that, the refrigerant gas flows to an upper portion of the electric motor portion 41 through passages located at the electric motor portion 41. Then, the refrigerant gas is discharged to the outside of the compressor 30 through the discharge pipe 35 located at an upper end of the sealed container 31.

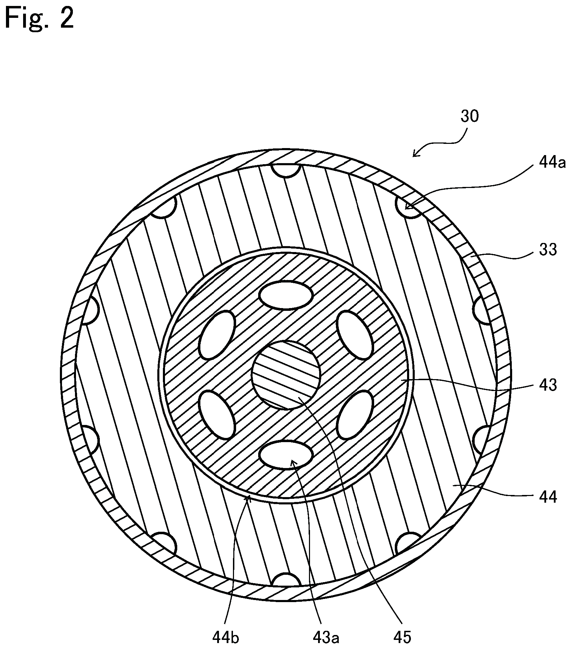

In the sealed container 31 of the compressor 30, a space 31a is located above the electric motor portion 41, and a space 31b is located under the electric motor portion 41. In the sealed container 31 in the example shown in FIG. 1, the upper space 31a is an internal space spreading from an uppermost portion of the electric motor portion 41 to the upper shell 32, and the lower space 31b is an internal space located between a lowermost portion of the electric motor portion 41 and an uppermost portion of the compression mechanism portion 42. As shown in FIG. 2 in addition to FIG. 1, in the compressor 30 according to the present disclosure, a plurality of passages 43a, 44a, and 44b through which the upper space 31a and the lower space 31b communicate with each other are located at the electric motor portion 41.

The passages 43a, 44a, and 44b can be classified into: the passages 43a located at the rotor 43 of the electric motor portion 41; and the passages 44a and 44b located outside the rotor 43. For convenience of explanation, the former passages are referred to as rotor passages 43a, and the latter passages are referred to as outside-rotor passages 44a and 44b.

FIG. 1 is a schematic longitudinal sectional view of the compressor 30, and FIG. 2 is a schematic cross-sectional view of the compressor 30 and corresponds to a cross section of a portion of the electric motor portion 41 at which the rotor 43 and the stator 44 are located. In the present disclosure, a section along an upper-lower direction of the compressor 30 is referred to as a longitudinal section, and a section along a direction orthogonal to the upper-lower direction is referred to as a cross section. Each of "a sectional area of the passage" and "a sectional area of the sealed container (compressor 30)" denotes the area of a cross section. Moreover, in FIG. 2, the rotor 43 and the stator 44 are schematically illustrated and hatched in order to clearly show the passages 43a, 44a, and 44b. Needless to say, the rotor 43 and the stator 44 do not have such simple structures shown in FIG. 2.

As shown by dotted lines in FIG. 1, the rotor passages 43a are located so as to penetrate the rotor 43 in an axial direction of the rotor 43. In the example shown in FIG. 2, six rotor passages 43a are located at equal intervals between an outer peripheral surface and an inner peripheral surface of the rotor 43 so as to be located at the same radius from the rotation axis, and each rotor passage 43a has an oval cross section. However, specific configurations of the rotor passages 43a are not limited to this. As long as the appropriate rotational performance of the rotor 43 is not impaired, the rotor passages 43a may be formed inside the rotor 43 so as to make the upper space 31a and the lower space 31b communicate with each other. The number of rotor passages 43a is not especially limited.

Among the outside-rotor passages 44a and 44b, the stator passages 44a are formed between the sealed container 31 (in FIG. 2, the body shell 33) and the stator 44 so as to be recessed toward an inside of the stator 44 (toward the shaft 45). In FIG. 1, the stator passages 44a are shown by dotted lines as with the rotor passages 43a. In the example shown in FIG. 2, ten stator passages 44a are located at equal intervals on an outer surface of the stator 44, and each stator passage 44a has a semi-circular section. However, specific configurations of the stator passages 44a are not limited to this. As long as the function of the stator 44 is not impaired, the stator passages 44a may be formed on the outer surface of the stator 44 so as to make the upper space 31a and the lower space 31b communicate with each other. The number of stator passages 44a is not especially limited.

Among the outside-rotor passages 44a and 44b, an air gap passage 44b is an air gap that is a gap between the rotor 43 and the stator 44 and utilized as the outside-rotor passage. Generally, the air gap that is a cylindrical gap is formed between the rotor 43 and the stator 44. Therefore, in the present disclosure, the air gap that is normally located at the electric motor portion 41 can be utilized as the air gap passage 44b.

The air gap is set as narrow as possible within such a range that the rotor 43 and the stator 44 do not mechanically contact each other. This is because the magnetic field is made stronger by narrowing (reducing) the air gap, and this can improve the output density of the rotor 43. In contrast, from the viewpoint of utilizing the air gap as the outside-rotor passage, the air gap may be widened within such a range that the required output density of the rotor 43 can be realized.

In the present embodiment, the stator passages 44a and the air gap passage 44b are described as the outside-rotor passages. However, specific configuration examples of the outside-rotor passages are not limited to these. Passages other than the stator passages 44a and the air gap passage 44b may be located at portions other than the rotor 43. Moreover, for example, when the upper space 31a and the lower space 31b can satisfactorily communicate with each other only by the air gap passage 44b, the stator passages 44a may not be provided. Or, when the upper space 31a and the lower space 31b can satisfactorily communicate with each other only by the stator passages 44a, the air gap may be narrowed as much as possible so as not to adequately serve as the passage.

In the above-described configuration of the compressor 30 according to the present disclosure, in particular, between at least two of components including the rotor passages 43a and the outside-rotor passages of the electric motor portion 41 and the sealed container 31, predetermined conditions are set regarding the sectional area and/or the heat transfer area.

Specifically, the conditions include: [First Condition] that a formula "A≥B" is satisfied, where A denotes a total sectional area of the rotor passages 43a, and B denotes a total sectional area of the outside-rotor passages; [Second Condition] that a formula "C≥D" is satisfied, where C denotes a total heat transfer area of the rotor passages 43a, and D denotes a total heat transfer area of the outside-rotor passages; [Third Condition] that a ratio C/S is 1.0 or more (C/S≥1.0), where C denotes the total heat transfer area of the rotor passages 43a, and S denotes the sectional area (container sectional area) of the sealed container 31 based on the inner diameter of the sealed container 31; and [Fourth Condition] that a ratio (A+B)/S is 0.05 or more ((A+B)/S≥0.05), where "A+B" denotes the total sectional area of all the passages 43a, 44a, and 44b (i.e., the sum of the total sectional area A of the rotor passages 43a and the total sectional area B of the outside-rotor passages), and S denotes the container sectional area.

The heat transfer areas of the passages 43a, 44a, and 44b in the second and third conditions among the first to fourth conditions are calculated as the product of an equivalent diameter (hydraulic diameter) d of each passage, a passage length L, and π (i.e., π×d×L).

As described above, in the internal space of the sealed container 31, the upper space 31a is located above the electric motor portion 41, and the lower space 31b is located under the electric motor portion 41. According to the above configuration, for example, when the disproportionation reaction of the hydrofluoroolefin occurs in the upper space 31a, the propagation of the disproportionation reaction to the lower space 31b can be satisfactorily suppressed. Similarly, when the disproportionation reaction occurs in the lower space 31b, the propagation of the disproportionation reaction to the upper space 31a can be satisfactorily suppressed.

The electric motor portion 41 of the compressor 30 generates heat during operation. This heat generation leads to a decrease in performance or the occurrence of an abnormality. Therefore, generally, the electric motor portion 41 includes the passages, and the refrigeration-cycle working medium passes through the passages to cool the electric motor portion 41. For the purpose of cooling the electric motor portion 41, the rotor 43 may include the passages, and the stator 44 may include the passages.

Moreover, in the compressor 30 shown in FIG. 1, the electric motor portion 41 is located in the sealed container 31 so as to "fill" the sealed container 31 in a cross-sectional direction without gaps. According to this configuration, the refrigeration-cycle working medium discharged from the compression mechanism portion 42 located at the lower side is a "compressed mixed gas" in which the refrigerant component and the lubricating oil 48 are mixed, i.e., the above-described working medium-containing composition.

Therefore, when the electric motor portion 41 includes the passages, and the compressed mixed gas flows through the passages, the electric motor portion 41 is cooled, and the lubricating oil 48 is separated from the compressed mixed gas. Thus, the refrigeration-cycle working medium mainly containing the refrigerant component is discharged from the discharge pipe 35 located at an uppermost portion of the sealed container 31.

To be specific, the passages located at the electric motor portion 41 have a function of cooling the electric motor portion 41 by the refrigeration-cycle working medium or the working medium-containing composition; and a function of separating the lubricating oil 48 from the working medium-containing composition to discharge substantially the refrigeration-cycle working medium (substantially the refrigerant component) from the discharge pipe 35. To realize these functions, the positions of the passages in the electric motor portion 41 are not especially limited. An arbitrary number of passages may be located at arbitrary positions of the electric motor portion 41 in consideration of various conditions required for the compressor 30.

The present inventors have diligently studied the propagation of the disproportionation reaction in the compressor 30. As a result, the disproportionation reaction of the hydrofluoroolefin occurs in the upper space 31a or the lower space 31b. The disproportionation reaction is induced by, for example, electric discharge at a coil end portion which is generated during the use of the refrigeration-cycle working medium, but it is very rare that such a trigger occurs simultaneously at both the upper side and the lower side of the electric motor portion 41. Thus, the disproportionation reaction occurs at the upper side or the lower side. Then, it is thought that the disproportionation reaction propagates to the other space through the plurality of passages through which the spaces 31a and 31b communicate with each other. Moreover, it is thought that among the plurality of passages, the rotor passages 43a located at the rotor 43 are less likely to propagate the disproportionation reaction than the outside-rotor passages.

Generally, there is a correlation between a high-temperature, high-pressure state inside the compressor 30 (inside the sealed container 31) and the rotational speed of the rotor 43. When the rotor 43 rotates at high speed, normally, the inside of the compressor 30 is at high temperature and high pressure. In a situation where the disproportionation reaction of the hydrofluoroolefin occurs, the inside of the compressor 30 is basically in a high-temperature, high-pressure state. At this time, the rotor 43 is rotating substantially at high speed. In contrast, while the rotor 43 is rotating at low speed, the disproportionation reaction hardly occurs. Therefore, it is thought that at the time of the low-speed rotation, the inside of the compressor 30 is not in the high temperature, high pressure state in which the disproportionation reaction occurs.

The passages 43a, 44a, and 44b located at the electric motor portion 41 are considered to have substantially the same functions from the viewpoint of the cooling of the electric motor portion 41 and the separation of the lubricating oil 48. However, from the viewpoint of the propagation of the disproportionation reaction, the rotor passages 43a are considered to be less likely to allow the disproportionation reaction to propagate as compared with the outside-rotor passages, such as the passages 44a and 44b.

The reasons are considered to be as follows. The refrigerant compressed by the compression mechanism portion 42 is discharged into the sealed container 31 to form a refrigerant flow that cools the electric motor portion 41 and separates the lubricating oil 48. At this time, a part of the refrigerant in the vicinity of the rotor 43 that rotates at high speed is guided into the rotor passages 43a, and another part of the refrigerant is guided by centrifugal force in a direction toward the outside of the sealed container 31. Therefore, the refrigerant flow from the vicinity of the rotor 43 toward the stator 44 of the electric motor portion 41 exists at all times. If the disproportionation reaction that occurs from one position above or under the stator 44 of the electric motor portion 41 propagates into the rotor passages 43a that rotate at high speed, the disproportionation reaction needs to propagate against the flow direction of the refrigerant flow. Therefore, the rotor passages 43a have the characteristic of being less likely to propagate the disproportionation reaction.

Therefore, for example, as described in the first condition, the passages 43a, 44a, and 44b located at the electric motor portion 41 are classified into: the passages 43a (rotor passages 43a) located at the rotor 43; and the passages 44a and 44b (outside-rotor passages) located outside the rotor 43, and the total sectional area A of the rotor passages 43a is set larger than the total sectional area B of the outside-rotor passages.

Thus, the electric motor portion 41 is satisfactorily cooled, and the lubricating oil 48 can be satisfactorily separated from the compressed mixed gas (working medium-containing composition) discharged from the compression mechanism portion 42. As described above, the total sectional area A of the rotor passages 43a is larger than the total sectional area B of the outside-rotor passages. Therefore, for example, even when the disproportionation reaction occurs in the upper space 31a, the disproportionation reaction is less likely to propagate to the lower space 31b through the rotor passages 43a. Finally, as the electric motor portion 41 is cooled, the disproportionation reaction itself can be dampened and eliminated.

In other words, the disproportionation reaction is confined to the upper space 31a by the rotor 43 including the rotor passages 43a having the larger total sectional area, and is eliminated before propagating to the lower space 31b on the opposite side. Especially, since the occurrence of the disproportionation reaction coincides with the high temperature, high pressure state in which the rotor 43 rotates at high speed, the propagation of the disproportionation reaction can be more effectively suppressed.

The above second condition is a condition that the total heat transfer area C of the rotor passages 43a is larger than the total heat transfer area D of the outside-rotor passages. Therefore, as with the above first condition, the electric motor portion 41 can be satisfactorily cooled, and the lubricating oil 48 can be satisfactorily separated from the compressed mixed gas. In addition, the disproportionation reaction that has occurred in the upper space 31a or the lower space 31b can be dampened and eliminated before propagating to the opposite side.

The third condition is a condition that the ratio C/S of the total heat transfer area C of the rotor passages 43a to the container sectional area S (the cross-sectional area of the sealed container 31) is 1.0 or more. According to the third condition, the total heat transfer area C of the rotor passage 43a is set larger based on the container sectional area S.

To be specific, in the first condition or the second condition, the sectional area or the heat transfer area is set regarding two types of components, i.e., the rotor passages 43a and the outside-rotor passages among the components including the rotor passages 43a, the outside-rotor passages, and the sealed container 31. On the other hand, in the third condition, the ratio of the heat transfer area to the sectional area is set regarding the rotor passages 43a and the sealed container 31.

In the third condition, the total heat transfer area C of the rotor passages 43a is set large based on the container sectional area S. As a result, as with the above second condition, the heat transfer area of the rotor passages 43a is set large. Therefore, in the third condition, as with the second condition, the electric motor portion 41 can be cooled, and the lubricating oil 48 can be separated from the compressed mixed gas. In addition, the propagation of the disproportionation reaction can be suppressed and dampened.

The fourth condition is a condition that the ratio (A+B)/S of the total sectional areas A+B of all the passages 43a, 44a, and 44b to the container sectional area S is 0.05 or more. In the fourth condition, the sectional areas are set regarding all the components including the rotor passages 43a, the outside-rotor passages, and the sealed container 31. In other words, unlike the first to third conditions, the fourth condition can be described as a condition that defines the lower limit of the total sectional area of all the passages located at the electric motor portion 41 based on the container sectional area S.

According to the fourth condition, all the sectional areas of the rotor passages 43a and the outside-rotor passages located at the electric motor portion 41 are set relatively large. Therefore, as with the first to third conditions, the cooling of the electric motor portion 41 and the separation of the lubricating oil 48 from the compressed mixed gas can be satisfactorily realized.

In the fourth condition, unlike the first to third conditions, the rotor passages 43a are not prioritized, but the passages 43a, 44a, and 44b are provided at the electric motor portion 41 so as to have sufficient sectional areas. Therefore, the total sectional area A of the rotor passages 43a is secured to a certain extent, and thus, the disproportionation reaction is less likely to propagate to the lower space 31b through the rotor passages 43a. As a result, the propagation of the disproportionation reaction can be suppressed and dampened.

In the compressor 30 according to the present disclosure, any one of the first to fourth conditions may be satisfied. However, two or more of these four conditions may be satisfied, three or more may be satisfied, or all four conditions may be satisfied. Thus, the possibility of the occurrence of a large-scale disproportionation reaction in the entire inside of the compressor 30 can be effectively suppressed or avoided, and this can further improve the reliability of the compressor 30.

Moreover, in the compressor 30 according to the present disclosure, the refrigeration-cycle working medium to be used may contain the hydrofluoroolefin as the refrigerant component. However, the refrigeration-cycle working medium may further contain the above-described disproportionation inhibitor. Thus, when the compressor 30 satisfies any of the first to fourth conditions, the propagation of the disproportionation reaction can be suppressed, and in addition, the disproportionation inhibitor can satisfactorily suppress or weaken the disproportionation reaction of the hydrofluoroolefin. Therefore, the occurrence of the disproportionation reaction inside the compressor 30 can be further reduced, and this can further improve the reliability of the compressor 30.

Moreover, as the refrigerant component, the refrigeration-cycle working medium used in the compressor 30 according to the present disclosure may contain the hydrofluoroolefin, and in addition, the above-described hydrofluorocarbon or another hydrofluoroolefin. Typically, the refrigeration-cycle working medium may contain 1,1,2-trifluoroethylene as the hydrofluoroolefin and may further contain difluoromethane as another refrigerant component. By using such a refrigeration-cycle working medium in the refrigeration cycle system including the compressor 30, the refrigeration cycle can be made more efficient while reducing the impact on the environment.

### Configuration Example of Refrigeration Cycle System

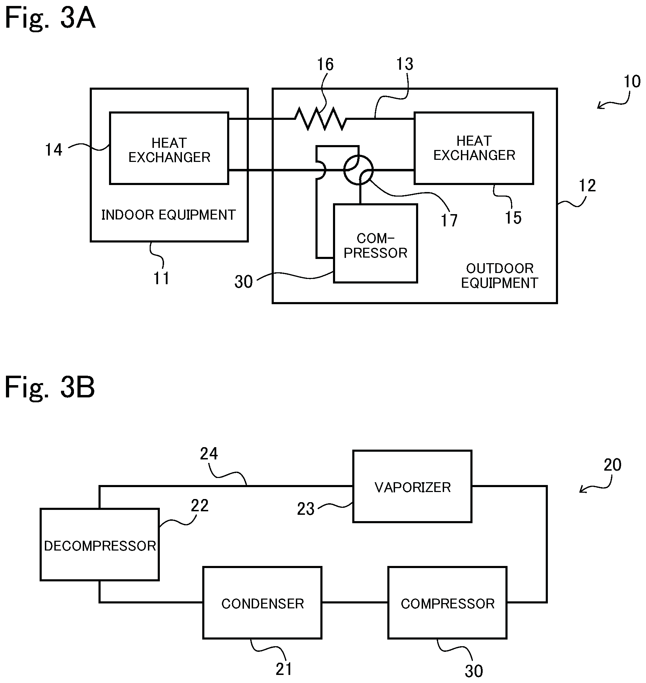

Next, one example of the refrigeration cycle system (refrigeration cycle apparatus) according to the present disclosure, i.e., one example of the above-described refrigeration cycle system including the compressor according to the present disclosure will be described with reference to FIGS. 3A and 3B. Since the compressor according to the present disclosure uses the above-described refrigeration-cycle working medium (working medium containing as the refrigerant component the hydrofluoroolefin that causes the disproportionation reaction), the refrigeration cycle system according to the present disclosure is also configured by using the above-described refrigeration-cycle working medium.

A specific configuration of the refrigeration cycle system according to the present disclosure is not especially limited and may be such a configuration that elements, such as a compressor, a condenser, an expander, and a vaporizer, are connected to each other through a pipe. Specific application examples of the refrigeration cycle system according to the present disclosure are not especially limited and include air conditioning equipment (air conditioner), a refrigerator (home use, business use), a dehumidifier, a showcase, an ice maker, a heat pump water heater, a heat pump washing/drying machine, and a vending machine.

The air conditioning equipment will be described as a representative application example of the refrigeration cycle system according to the present disclosure. Specifically, as schematically shown in a block diagram of FIG. 3A, air conditioning equipment 10 according to the present embodiment includes indoor equipment 11, outdoor equipment 12, and a pipe 13 connecting the indoor equipment 11 and the outdoor equipment 12. The indoor equipment 11 includes a heat exchanger 14, and the outdoor equipment 12 includes a heat exchanger 15, the compressor 30, and a decompressor 16.

The heat exchanger 14 of the indoor equipment 11 and the heat exchanger 15 of the outdoor equipment 12 are annularly connected to each other by the pipe 13, and this forms the refrigeration cycle. Specifically, the heat exchanger 14 of the indoor equipment 11, the compressor 30, the heat exchanger 15 of the outdoor equipment 12, and the decompressor 16 are annularly connected to each other in this order by the pipe 13. Moreover, a four-way valve 17 for switching between cooling and heating is located at the pipe 13 that connects the heat exchanger 14, the compressor 30, and the heat exchanger 15 to each other. The indoor equipment 11 includes a fan, a temperature sensor, an operating device, and the like which are not shown, and the outdoor equipment 12 includes a blower, an accumulator, and the like which are not shown. Furthermore, various valve devices (including the four-way valve 17), a strainer, and the like which are not shown are located at the pipe 13.

The heat exchanger 14 included in the indoor equipment 11 performs heat exchange between indoor air taken into the indoor equipment 11 by the fan and a refrigerant flowing inside the heat exchanger 14. At the time of the heating, the indoor equipment 11 sends air, which has been heated by the heat exchange, to an indoor side. At the time of the cooling, the indoor equipment 11 sends air, which has been cooled by the heat exchange, to the indoor side. The heat exchanger 15 included in the outdoor equipment 12 performs heat exchange between outside air taken into the outdoor equipment 12 by the blower and a refrigerant flowing inside the heat exchanger 15.

Specific configurations of the indoor equipment 11 and the outdoor equipment 12 or specific configurations of the heat exchanger 14, the heat exchanger 15, the compressor 30, the decompressor 16, the four-way valve 17, the fan, the temperature sensor, the operating device, the blower, the accumulator, the other valve devices, the strainer, and the like are not especially limited, and known configurations can be suitably used.

One example of the operation of the air conditioning equipment 10 shown in FIG. 3A will be specifically described. First, in a cooling operation or a dehumidifying operation, the compressor 30 of the outdoor equipment 12 compresses and discharges a gas refrigerant, and thus, the gas refrigerant is sent through the four-way valve 17 to the heat exchanger 15 of the outdoor equipment 12. Since the heat exchanger 15 performs the heat exchange between the outside air and the gas refrigerant, the gas refrigerant condenses into liquid. This liquid refrigerant is decompressed by the decompressor 16 and is sent to the heat exchanger 14 of the indoor equipment 11. In the heat exchanger 14, the liquid refrigerant vaporizes by the heat exchange with the indoor air to become the gas refrigerant. This gas refrigerant returns through the four-way valve 17 to the compressor 30 of the outdoor equipment 12. The compressor 30 compresses the gas refrigerant and discharges the gas refrigerant through the four-way valve 17 to the heat exchanger 15 again.

Moreover, in a heating operation, the compressor 30 of the outdoor equipment 12 compresses and discharges the gas refrigerant, and thus, the gas refrigerant is sent through the four-way valve 17 to the heat exchanger 14 of the indoor equipment 11. In the heat exchanger 14, the gas refrigerant condenses into liquid by the heat exchange with the indoor air. This liquid refrigerant is decompressed by the decompressor 16 to become a gas-liquid two-phase refrigerant, and the gas-liquid two-phase refrigerant is sent to the heat exchanger 15 of the outdoor equipment 12. Since the heat exchanger 15 performs the heat exchange between the outside air and the gas-liquid two-phase refrigerant, the gas-liquid two-phase refrigerant vaporizes to become the gas refrigerant, and the gas refrigerant returns to the compressor 30. The compressor 30 compresses the gas refrigerant and discharges the gas refrigerant through the four-way valve 17 to the heat exchanger 14 of the indoor equipment 11 again.

Moreover, a refrigerator will be described as another representative application example of the refrigeration cycle system according to the present disclosure. Specifically, for example, as schematically shown in a block diagram of FIG. 3B, a refrigerator 20 according to the present embodiment includes the compressor 30 shown in FIG. 1, a condenser 21, a decompressor 22, a vaporizer 23, a pipe 24, and the like. Moreover, although not shown, the refrigerator 20 further includes a casing as a main body, a blower, an operating device, a controller, and the like.

The compressor 30 compresses a refrigerant gas to generate a high-temperature high-pressure gas refrigerant. The condenser 21 cools the refrigerant to liquefy the refrigerant. The decompressor 22 is constituted by, for example, a capillary tube and decompresses the liquefied refrigerant (liquid refrigerant). The vaporizer 23 vaporizes the refrigerant to generate a low-temperature low-pressure gas refrigerant. The compressor 30, the condenser 21, the decompressor 22, and the vaporizer 23 are annularly connected to each other in this order by the pipe 24 through which the refrigerant gas flows. Thus, the refrigeration cycle is configured.

Configurations of the compressor 30, the condenser 21, the decompressor 22, the vaporizer 23, the pipe 24, the main body casing, the blower, the operating device, the controller, and the like are not especially limited, and known configurations can be suitably used. Moreover, the refrigerator 20 may include known configurations other than the above configurations.

One example of the operation of the refrigerator 20 shown in FIG. 3B will be specifically described. The compressor 30 compresses the gas refrigerant and discharges the gas refrigerant to the condenser 21. The condenser 21 cools the gas refrigerant to generate the liquid refrigerant. The liquid refrigerant is decompressed by passing through the decompressor 22, and is then sent to the vaporizer 23. In the vaporizer 23, the liquid refrigerant takes heat from surroundings to vaporize and become the gas refrigerant, and the gas refrigerant returns to the compressor 30. The compressor 30 compresses the gas refrigerant and discharges the gas refrigerant to the condenser 21 again.

In this refrigeration cycle system, as described above, the compressor 30 satisfies at least one of: [First Condition] that the total sectional area A of the rotor passages 43a is not less than the total sectional area B of the outside-rotor passages (A≥B); [Second Condition] that the total heat transfer area C of the rotor passages 43a is not less than the total heat transfer area D of the outside-rotor passages (C≥D); [Third Condition] that the ratio C/S of the total heat transfer area C of the rotor passages 43a to the container sectional area S of the sealed container 31 is 1.0 or more (C/S≥1.0); or [Fourth Condition] that the ratio (A+B)/S of the total sectional areas A+B of all the passages 43a, 44a, and 44b to the container sectional area S is 0.05 or more ((A+B)/S≥0.05).

Thus, among all the passages located at the electric motor portion 41 of the compressor 30, the rotor passages 43a, which are relatively less likely to propagate the disproportionation reaction, can be made predominant. As a result, the disproportionation reaction that occurs in one of the upper space 31a located above the electric motor portion 41 and the lower space 31b located under the electric motor portion 41 can be satisfactorily prevented from propagating to the other.

Moreover, since the propagation of the disproportionation reaction is suppressed, the disproportionation reaction itself can be dampened and finally eliminated by the cooling of the electric motor portion 41 which is the main function of the passages 43a, 44a, and 44b. As a result, the possibility of the occurrence of a large-scale disproportionation reaction in the entire inside of the compressor 30 can be effectively suppressed or avoided. This can further improve the reliability of the refrigeration cycle system including the compressor 30.

The present invention is not limited to the above-described embodiment and may be modified in various ways within the scope of the claims, and embodiments obtained by suitably combining technical means disclosed in different embodiments and/or plural modified examples are included in the technical scope of the present invention.

From the foregoing description, numerous modifications and other embodiments of the present invention are obvious to those skilled in the art. Accordingly, the foregoing description is to be construed as illustrative only, and is provided for the purpose of teaching those skilled in the art the best mode for carrying out the present invention. The structural and/or functional details may be substantially modified without departing from the scope of the present invention.

### Additional Information

The present specification discloses the following technologies by the above embodiment.

### First Technology

A compressor that uses a refrigeration-cycle working medium containing at least hydrofluoroolefin as a refrigerant component, the compressor including: an electric motor portion including a rotor and a stator; a compression mechanism portion driven by the electric motor portion; and a sealed container that accommodates the electric motor portion and the compression mechanism portion, wherein: an upper space located above the electric motor portion and a lower space located under the electric motor portion are in the sealed container; the electric motor portion includes a plurality of passages through which the upper space and the lower space communicate with each other; and a formula "A≥B" is satisfied, where A denotes a total sectional area of all passages located at the rotor among the plurality of passages, and B denotes a total sectional area of all passages located outside the rotor among the plurality of passages.

### Second Technology

A compressor that uses a refrigeration-cycle working medium containing at least hydrofluoroolefin as a refrigerant component, the compressor including: an electric motor portion including a rotor and a stator; a compression mechanism portion driven by the electric motor portion; and a sealed container that accommodates the electric motor portion and the compression mechanism portion, wherein: an upper space located above the electric motor portion and a lower space located under the electric motor portion are in the sealed container; the electric motor portion includes a plurality of passages through which the upper space and the lower space communicate with each other; and when a heat transfer area of each passage is defined as a product (π×d×L) of an equivalent diameter d of the passage, a passage length L, and π, a formula "C≥D" is satisfied, where C denotes a total heat transfer area of all passages located at the rotor among the plurality of passages, and D denotes a total heat transfer area of all passages located outside the rotor among the plurality of passages.

### Third Technology

A compressor that uses a refrigeration-cycle working medium containing at least hydrofluoroolefin as a refrigerant component, the compressor including: an electric motor portion including a rotor and a stator; a compression mechanism portion driven by the electric motor portion; and a sealed container that accommodates the electric motor portion and the compression mechanism portion, wherein: an upper space located above the electric motor portion and a lower space located under the electric motor portion are in the sealed container; the electric motor portion includes a plurality of passages through which the upper space and the lower space communicate with each other; and when a heat transfer area of each passage is defined as a product (π×d×L) of an equivalent diameter d of the passage, a passage length L, and π, a ratio C/S is 1.0 or more (C/S≥1.0), where C denotes a total heat transfer area of all passages located at the rotor among the plurality of passages, and S denotes a sectional area of the sealed container based on an inner diameter of the sealed container.

### Fourth Technology

A compressor that uses a refrigeration-cycle working medium containing at least hydrofluoroolefin as a refrigerant component, the compressor including: an electric motor portion including a rotor and a stator; a compression mechanism portion driven by the electric motor portion; and a sealed container that accommodates the electric motor portion and the compression mechanism portion, wherein: an upper space located above the electric motor portion and a lower space located under the electric motor portion are in the sealed container; the electric motor portion includes a plurality of passages through which the upper space and the lower space communicate with each other; and a ratio (A+B)/S is 0.05 or more ((A+B)/S≥0.05), where A denotes a total sectional area of all passages located at the rotor among the plurality of passages, B denotes a total sectional area of all passages located outside the rotor among the plurality of passages, and S denotes a sectional area of the sealed container based on an inner diameter of the sealed container.

### Fifth Technology

The compressor according to any one of the first to fourth technologies, wherein the passages located outside the rotor include at least one of an air gap passage located between the rotor and the stator or a stator passage located between the stator and the sealed container.

### Sixth Technology

The compressor according to any one of the first to fifth technologies, wherein the hydrofluoroolefin includes at least one of 1,1,2-trifluoroethylene (HFO1123) or 1,2-difluoroethylene (HFO1132).

### Seventh Technology

The compressor according to any one of the first to sixth technologies, wherein the refrigeration-cycle working medium further contains: difluoromethane as the refrigerant component; and as a disproportionation inhibitor, at least one of saturated hydrocarbon, haloalkane, or fluoroalkane having a boiling point of 0°C or less and having one to three carbon atoms (except for difluoromethane).

### Eighth Technology

A refrigeration cycle system that uses a refrigeration-cycle working medium containing at least hydrofluoroolefin as a refrigerant component, the refrigeration cycle system including the compressor according to any one of the first to seventh technologies.

### Industrial Applicability

The present invention can be suitably used in the field of a compressor that uses hydrofluoroolefin (HFO) as a refrigerant component, and in addition, can be widely and suitably used in the field of the refrigeration cycle system including the compressor, i.e., in the field of a refrigeration cycle system, such as air conditioning equipment (air conditioner), a refrigerator (home use, business use), a dehumidifier, a showcase, an ice maker, a heat pump water heater, a heat pump washing/drying machine, or a vending machine.

### Reference Signs List

- 10: air conditioning equipment (refrigeration cycle system)
- 11: indoor equipment
- 12: outdoor equipment
- 13: pipe
- 14: heat exchanger
- 15: heat exchanger
- 16: decompressor
- 17: four-way valve
- 20: refrigerator (refrigeration cycle system)
- 21: condenser
- 22: decompressor
- 23: evaporator
- 24: pipe
- 30: compressor (rotary type)
- 31: sealed container
- 31a: upper space
- 31b: lower space
- 32: upper shell
- 33: body shell
- 34: lower shell
- 35: discharge pipe
- 36: suction pipe
- 41: electric motor portion (motor)
- 42: compression mechanism portion
- 43: rotor
- 43a: rotor passage
- 44: stator
- 44a: stator passage (outside-rotor passage)
- 44b: air gap passage (outside-rotor passage)
- 45: shaft
- 46: piston
- 47: cylinder
- 48: lubricating oil

## Claims

1. A compressor that uses a refrigeration-cycle working medium containing at least hydrofluoroolefin as a refrigerant component,
the compressor comprising:
an electric motor portion including a rotor and a stator;
a compression mechanism portion driven by the electric motor portion; and
a sealed container that accommodates the electric motor portion and the compression mechanism portion, wherein:
an upper space located above the electric motor portion and a lower space located under the electric motor portion are in the sealed container;
the electric motor portion includes a plurality of passages through which the upper space and the lower space communicate with each other; and
a formula "A≥B" is satisfied, where A denotes a total sectional area of all passages located at the rotor among the plurality of passages, and B denotes a total sectional area of all passages located outside the rotor among the plurality of passages.

2. A compressor that uses a refrigeration-cycle working medium containing at least hydrofluoroolefin as a refrigerant component,
the compressor comprising:
an electric motor portion including a rotor and a stator;
a compression mechanism portion driven by the electric motor portion; and
a sealed container that accommodates the electric motor portion and the compression mechanism portion, wherein:
an upper space located above the electric motor portion and a lower space located under the electric motor portion are in the sealed container;
the electric motor portion includes a plurality of passages through which the upper space and the lower space communicate with each other; and
when a heat transfer area of each passage is defined as a product (π×d×L) of an equivalent diameter d of the passage, a passage length L, and π, a formula "C≥D" is satisfied, where C denotes a total heat transfer area of all passages located at the rotor among the plurality of passages, and D denotes a total heat transfer area of all passages located outside the rotor among the plurality of passages.

3. A compressor that uses a refrigeration-cycle working medium containing at least hydrofluoroolefin as a refrigerant component,
the compressor comprising:
an electric motor portion including a rotor and a stator;
a compression mechanism portion driven by the electric motor portion; and
a sealed container that accommodates the electric motor portion and the compression mechanism portion, wherein:
an upper space located above the electric motor portion and a lower space located under the electric motor portion are in the sealed container;
the electric motor portion includes a plurality of passages through which the upper space and the lower space communicate with each other; and
when a heat transfer area of each passage is defined as a product (π×d×L) of an equivalent diameter d of the passage, a passage length L, and π, a ratio C/S is 1.0 or more (C/S≥1.0), where C denotes a total heat transfer area of all passages located at the rotor among the plurality of passages, and S denotes a sectional area of the sealed container based on an inner diameter of the sealed container.

4. A compressor that uses a refrigeration-cycle working medium containing at least hydrofluoroolefin as a refrigerant component,
the compressor comprising:
an electric motor portion including a rotor and a stator;
a compression mechanism portion driven by the electric motor portion; and
a sealed container that accommodates the electric motor portion and the compression mechanism portion, wherein:
an upper space located above the electric motor portion and a lower space located under the electric motor portion are in the sealed container;
the electric motor portion includes a plurality of passages through which the upper space and the lower space communicate with each other; and
a ratio (A+B)/S is 0.05 or more ((A+B)/S≥0.05), where A denotes a total sectional area of all passages located at the rotor among the plurality of passages, B denotes a total sectional area of all passages located outside the rotor among the plurality of passages, and S denotes a sectional area of the sealed container based on an inner diameter of the sealed container.

5. The compressor according to any one of claims 1 to 4, wherein the passages located outside the rotor include at least one of an air gap passage located between the rotor and the stator or a stator passage located between the stator and the sealed container.

6. The compressor according to any one of claims 1 to 4, wherein the hydrofluoroolefin includes at least one of 1,1,2-trifluoroethylene (HFO1123) or 1,2-difluoroethylene (HFO1132).

7. The compressor according to any one of claims 1 to 4, wherein the refrigeration-cycle working medium further contains:
difluoromethane as the refrigerant component; and
as a disproportionation inhibitor, at least one of saturated hydrocarbon, haloalkane, or fluoroalkane having a boiling point of 0°C or less and having one to three carbon atoms (except for difluoromethane).

8. A refrigeration cycle system that uses a refrigeration-cycle working medium containing at least hydrofluoroolefin as a refrigerant component,
the refrigeration cycle system comprising the compressor according to any one of claims 1 to 4.
